# DEMANDE DE BREVET EUROPEEN

(11) **EP 3 300 224 A1**
(43) Date de publication de la demande: **28.03.2018**
(21) Numéro de dépôt: 17182116.8
(22) Date de dépôt: 19.07.2017
(51) Int. Cl.: H02K 7/08, H02K 5/173, H02K 11/215, H02K 1/27, H02K 1/30

(54) **MOTEUR ELECTRIQUE A COURANT CONTINU SANS BALAIS POUR SYSTEME D'ESSUYAGE DE VEHICULE AUTOMOBILE**

(30) Priorité: 26.09.2016 FR 1659034
(71) Demandeur: Valeo Systèmes d'Essuyage, 78322 Le Mesnil Saint Denis (FR)
(72) Inventeur: HERRADA, Jose-Luis, 78322 Le Mesnil Saint Denis (FR)
(74) Mandataire: Callu Danseux, Violaine

(57) **Abrégé**

L'invention est relative à un moto-réducteur (1) pour système d'essuyage de véhicule automobile comprenant :
- un moteur électrique (2) à courant continu sans balais comportant :
- un rotor (20),
- un stator (21) présentant des bobines d'excitation électromagnétique du rotor,
- un arbre de rotation (22) solidaire du rotor,

- un mécanisme réducteur (3) reliant l'arbre de rotation (22) et un arbre de sortie (8) du moto-réducteur.

Selon l'invention, le guidage en rotation de l'arbre de rotation (22) du rotor est assuré uniquement par deux roulements (23, 24) disposés respectivement aux deux extrémités longitudinales de l'arbre de rotation (22).

## Description

La présente invention concerne un moto-réducteur pour système d'essuyage de véhicule automobile, ainsi qu'un système d'essuyage comprenant un tel moto-réducteur.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balais (« Brushless » en anglais) qui présentent de nombreux avantages comme une grande durée de vie, un encombrement et une consommation réduits ainsi qu'un faible niveau sonore.

Cependant, la commande des moteurs électriques est plus complexe par rapport aux moteurs électriques à balais car pour permettre un bon fonctionnement, il est nécessaire de connaître précisément la position angulaire du rotor du moteur électrique à courant continu sans balais.

En effet, de tels moteurs électriques comprennent des bobines d'excitation électromagnétique disposées au niveau du stator et alimentées alternativement via un onduleur pour permettre l'entraînement du rotor.

Or, afin de pouvoir commuter les interrupteurs de l'onduleur (en général six commutations avec chaque tour du rotor) et donc l'alimentation des bobines électromagnétiques à des instants optimaux pour permettre d'obtenir l'entraînement désiré du rotor, il convient de connaître à chaque instant la position du rotor. A cet effet, la position du rotor et sa vitesse angulaire sont bien souvent déterminées par l'exploitation des signaux générés par un dispositif qui comprend un aimant multipolaire, monté tournant avec le rotor, et des capteurs à effet Hall agencés en des positions fixes par rapport à l'aimant.

Le document WO 2016/010023 divulgue un tel un moto-réducteur pour système d'essuyage de véhicule automobile utilisant un moteur à courant continu sans balais. Le moteur sans balais comporte un stator présentant des bobines d'excitation électromagnétique du rotor, et le rotor est monté rigidement à l'extrémité d'un arbre de rotation. Cet arbre de rotation s'étend depuis un partie de carter pour l'ensemble rotor/stator et jusqu'à une partie du carter recevant le mécanisme de réduction qui est un engrenage à vis sans fin.

La vis de l'engrenage est solidaire de l'arbre de rotation du rotor et engrène avec la roue dentée solidaire de l'arbre de sortie du moto-réducteur.

De manière notable et comme visible à la figure 4 (ou à la figure 8) du document WO 2016/010023, on utilise seulement deux roulements à billes pour guider en rotation l'arbre de rotation du rotor, avec, d'une part, un premier roulement à billes, repéré 39 supportant une partie centrale de l'arbre de rotation, intermédiaire entre le rotor et la vis sans fin, et d'autre part, un deuxième roulement à l'extrémité longitudinale de l'arbre disposée de l'autre côté de la vis sans fin par rapport au premier roulement.

En particulier, la partie de longueur de l'arbre de rotation s'étendant depuis le premier roulement vers le rotor est guidée seulement par le premier roulement, l'extrémité longitudinale de l'arbre ressortant de l'autre côté du rotor étant libre de guidage.

Un tel guidage au moyen de deux roulements uniquement diffère de la pratique usuelle qui utilise classiquement un troisième roulement pour guider en rotation l'extrémité distale de l'arbre à proximité du rotor. Selon les constatations de l'inventeur, un tel guidage de l'arbre utilisant uniquement deux roulements permet de limiter l'encombrement du moto-réducteur suivant la direction de l'arbre. En revanche, l'omission du troisième roulement n'est pas idéale en termes d'efforts mécaniques, ce défaut pouvant être à l'origine de l'apparition de vibrations lors de la mise en rotation du rotor.

Plus encore, dans l'état de la technique connu, que le guidage de l'arbre soit à deux roulements ou à trois roulements comme précédemment cité, il est d'usage de toujours prévoir un roulement en une position intermédiaire sur la longueur de l'arbre de rotation, à proximité de la vis sans fin et un autre roulement sur l'extrémité longitudinale de l'arbre de l'autre côté de la vis sans fin. Un tel guidage par le positionnement de roulement au plus près de la vis sans fin permet de limiter le fléchissement de l'arbre de rotation au niveau de cette partie engrenante, et dans le but d'assurer un fonctionnement satisfaisant du mécanisme réducteur, sans risque de ripage de l'engrenage.

Dans le document WO 2016/010023, le roulement intermédiaire repéré 39 est disposé à proximité de l'aimant multipolaire du dispositif assurant la détermination de la position du rotor. Limiter le fléchissement de l'arbre, permet encore de maintenir dans des tolérances admises, l'écart radial entre l'aimant multipolaire et chaque capteur à effet Hall, de manière à assurer le bon fonctionnement du dispositif de capteur.

La présente invention a pour but de pallier les inconvénients précités en proposant un moto-réducteur pour système d'essuyage de véhicule automobile dont le guidage de l'arbre du moteur permet d'obtenir une bonne compacité selon l'axe longitudinal de l'arbre de rotation, et sans sacrifier l'équilibrage dynamique du moteur électrique.

D'autres buts et avantages de l'invention apparaitront au cours de la description qui va suivre qui n'est donnée qu'à titre indicatif et qui n'a pas pour but de la limiter.

Aussi l'invention concerne un moto-réducteur pour système d'essuyage de véhicule automobile comprenant :
- un moteur électrique à courant continu sans balais comportant :
   - un rotor,
   - un stator présentant des bobines d'excitation électromagnétique du rotor,
   - un arbre de rotation solidaire du rotor,
- un mécanisme réducteur reliant l'arbre de rotation et un arbre de sortie du moto-réducteur,
et dans lequel le guidage en rotation de l'arbre de rotation du rotor est assuré uniquement par deux roulements disposés respectivement aux deux extrémités longitudinales de l'arbre de rotation.

Selon des caractéristiques optionnelles de l'invention, pouvant être prises seules ou en combinaison :
- le mécanisme réducteur comprend un système vis sans fin/roue dentée, la vis sans fin étant solidaire de l'arbre de rotation du rotor, la roue dentée étant solidaire de l'arbre de sortie du moto-réducteur;
- le diamètre de l'arbre de rotation au niveau des extrémités longitudinales supportées par les deux roulements est supérieur au diamètre de l'arbre au niveau de la vis sans fin ;
- le roulement assurant le guidage de l'extrémité longitudinale de l'arbre de rotation du côté du moteur électrique est agencé interne à l'ensemble rotor et stator ;
- le moto-réducteur comportant un carter recevant le moteur électrique, et de préférence également le mécanisme de réducteur, ledit carter comprenant une partie saillante reçue à l'intérieur de l'ensemble rotor/ stator et dans lequel le roulement assurant le guidage de l'extrémité longitudinale de l'arbre de rotation du côté du moteur électrique est maintenu dans un siège de la partie saillante ;
- le moteur électrique comprend un support creux portant les éléments magnétiques du rotor, coaxial et solidaire en rotation de l'arbre de rotation, ledit support creux venant coiffer le roulement assurant le guidage de l'extrémité longitudinale de l'arbre de rotation du côté du moteur électrique en s'étendant axialement au-delà de l'extrémité longitudinale de l'arbre de rotation,;
- le support creux comprend un manchon assurant la fixation dudit support creux sur l'arbre de rotation dans une position sur l'arbre intermédiaire entre le mécanisme réducteur et le roulement assurant le guidage de l'extrémité longitudinale de l'arbre de rotation du côté du moteur électrique;
- le moto-réducteur présente un dispositif pour la détermination de la position angulaire du rotor comprenant un aimant multipolaire solidaire en rotation du rotor, et un ou plusieurs capteurs à effets Hall, et dans lequel ledit aimant multipolaire prend la forme d'une bague montée solidaire dudit support creux, agencé autour dudit manchon ;
- chacun des roulements comprend une bague extérieure, une bague intérieure, et des éléments roulants, les extrémités longitudinales de l'arbre de rotation correspondant aux roulements étant chacune de diamètre ajusté au diamètre interne de la bague intérieure du roulement associé ;
- le blocage de la position axiale de l'un et/ou l'autre des deux roulements sur l'arbre de rotation est assuré par un anneau élastique reçu dans une gorge de l'arbre de rotation.
L'invention concerne encore un système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur conforme à l'invention dont l'arbre de sortie entraine le mécanisme d'embiellage.

L'invention sera mieux comprise à la lecture de la description suivante accompagnée des dessins en annexe, parmi lesquels :

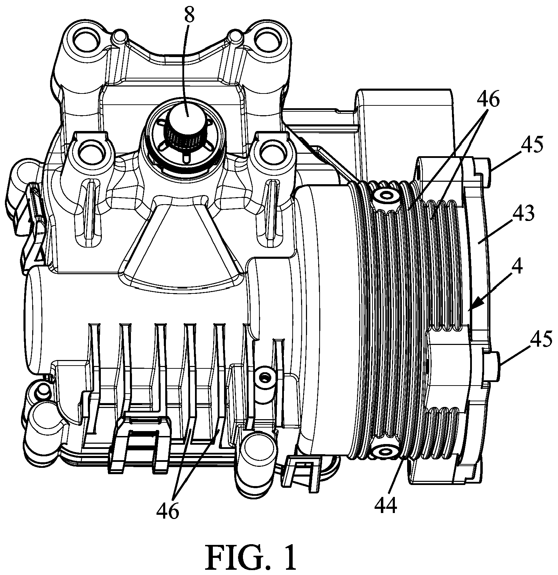

- La figure 1 est une vue en perspective d'un moto-réducteur conforme à l'invention selon un mode de réalisation,

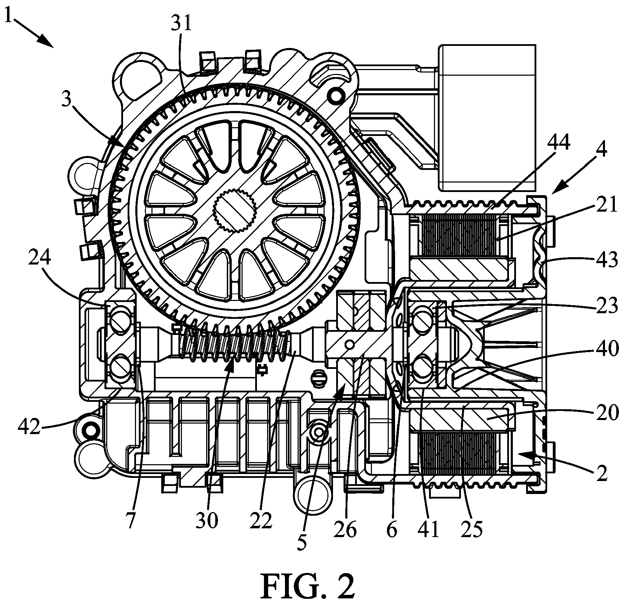

- La figure 2 est une vue de coupe selon un plan passant par l'axe de l'arbre de rotation du rotor du moteur électrique du moto-réducteur de la figure 1.

Aussi l'invention concerne un moto-réducteur 1 pour système d'essuyage de véhicule automobile comprenant :
- un moteur électrique 2 à courant continu sans balais comportant :
   - un rotor 20,
   - un stator 21 présentant des bobines d'excitation électromagnétique du rotor,
   - un arbre de rotation 22 solidaire du rotor,
- un mécanisme réducteur 3 reliant l'arbre de rotation 22 et un arbre de sortie 8 du moto-réducteur.

Un tel moto-réducteur comprend un dispositif de détermination de la position angulaire du rotor 20 par rapport au stator 21. Une unité de commande (non illustrée) est configurée pour générer des signaux de commande pour alimenter les bobines d'excitation électromagnétique du stator 21 en fonction de la position angulaire du rotor déterminée par le dispositif de détermination de la position angulaire du rotor.

Selon un mode de réalisation, le dispositif de détermination de la position angulaire du rotor peut comprendre un aimant multipolaire 5 solidaire en rotation du rotor, et un ou plusieurs capteurs à effet Hall (non illustrés) en des positions fixes, aptes à détecter les changements de domaines magnétiques de l'aimant multipolaire lors de la rotation du rotor.

L'invention s'intéresse ici plus particulièrement au guidage de l'arbre de rotation 22 du rotor, qui, selon l'invention, est assuré uniquement par deux paliers, en particulier deux roulements 23, 24 disposés respectivement aux deux extrémités longitudinales de l'arbre de rotation 22.

Un guidage de l'arbre de rotation 22 par ses deux extrémités longitudinales permet d'assurer un meilleur guidage de l'arbre de rotation du rotor par comparaison à l'état de la technique précité, connu du document WO 2016/010023. Un guidage mis en oeuvre par deux paliers uniquement est encore avantageux par comparaison à l'état de la technique précité mettant en oeuvre un guidage à trois paliers (y compris un roulement intermédiaire) en ce qu'il permet d'augmenter la compacité du moto-réducteur suivant la direction de l'arbre de rotation.

Chacun des roulements 23, 24 comprend une bague extérieure, une bague intérieure, et des éléments roulants, telles que des billes. Pour chaque extrémité longitudinale de l'arbre de rotation, la bague intérieure du roulement 23 (ou 24) correspondant peut être de diamètre interne ajusté au diamètre externe de l'arbre au niveau de l'extrémité longitudinale correspondante.

Un premier siège 41 du carter 4, de diamètre ajusté à la bague extérieure reçoit le roulement 23 assurant le guidage de l'arbre de rotation 22 à l'extrémité longitudinale de l'arbre, côté moteur électrique. Un second siège 42, de diamètre ajusté à la bague extérieure reçoit le roulement 24 assurant le guidage de l'autre extrémité longitudinale de l'arbre de rotation 22. Le blocage de la position axiale de l'un et/ou l'autre des deux roulements 23, 24 sur l'arbre de rotation 22 peut être assuré par un anneau élastique 6, 7 reçu dans une gorge de l'arbre de rotation 22.

Un premier anneau élastique 6, reçu dans une première gorge de l'arbre de rotation 22 peut permettre de bloquer la position du roulement 23 dans le siège 41 correspondant du carter 4, un second anneau élastique 7 reçu dans une deuxième gorge de l'arbre de rotation 22 bloquant la position axiale de l'autre roulement 24 dans l'autre siège 42 du carter 4. Les deux anneaux élastiques 6 et 7 peuvent respectivement engager en butée avec les deux roulements 23 et 24, coté intérieur, afin d'interdire leur rapprochement sur l'arbre de rotation 22.

Selon un mode de réalisation, le mécanisme réducteur 3 peut comprendre un système vis sans fin 30 /roue dentée 31, la vis sans fin étant solidaire de l'arbre de rotation 22 du rotor 20, la roue dentée 31 étant solidaire de l'arbre de sortie 8 du moto-réducteur. Cet arbre de sortie 8 est sensiblement perpendiculaire à l'arbre de rotation 22 du moteur électrique 2. Le filet de la vis sans fin 20 peut être obtenu à partir de la matière venant de l'arbre de rotation 22, typiquement en métal.

On remarque que le diamètre de l'arbre de rotation 22 au niveau des extrémités longitudinales supportées par les deux roulements 23, 24 peut être supérieur au diamètre de l'arbre au niveau de la vis sans fin 30. Il est ainsi possible d'augmenter la résistance à la flexion de l'arbre de rotation 22, par une augmentation moyenne du diamètre de l'arbre de rotation. On obtient toujours un fonctionnement satisfaisant du mécanisme réducteur, en particulier sans risque de ripage entre la vis 30 et la roue 31 de l'engrenage du mécanisme réducteur, et alors que le guidage de l'arbre de rotation est dépourvu de palier de guidage sur une portion centrale de l'arbre.

Alternativement ou additionnellement, il est encore possible de limiter la flèche en réduisant la longueur de l'arbre de rotation 22 par comparaison à l'état de la technique connu. A cet effet, on remarque que, selon un mode de réalisation illustré, le roulement 23 assurant le guidage de l'extrémité longitudinale de l'arbre de rotation du côté du moteur électrique 2 peut être agencé à l'intérieur de l'ensemble rotor 20 et stator 21, logé dans un évidemment interne au rotor 20. Cette extrémité de l'arbre de rotation peut ainsi être avantageusement guidée par le roulement 23, sans nécessiter une longueur d'arbre telle que son extrémité ressorte au-delà du rotor, et selon l'état de la technique connu de la Demanderesse.

A cet effet, ledit carter 4 recevant le moteur électrique 3 peut comprendre une partie saillante 40 reçue à l'intérieur de l'ensemble rotor 20 et stator 21. Le roulement 23 est maintenu dans cette partie saillante 40, la bague extérieure du roulement 23 reçue dans le siège 41. Cette partie saillante 40 du carter 4 peut faire partie d'un flasque de fermeture 43 du carter 4 destiné à fermer de manière amovible l'ouverture circulaire d'un socle 44 du carter. Lorsque le flasque de fermeture est retiré, l'ouverture autorise le retrait des composants du moteur électrique, tels que le rotor 20, le stator 21, l'arbre de rotation 22. Ce socle 44 peut être un élément métallique, notamment en aluminium, typiquement obtenu par moulage, et peut présenter sur sa surface externe des ailettes 46 destinées à faciliter l'évacuation de la chaleur.

Ce flasque de fermeture 43 peut comprendre une partie en forme de disque, de diamètre supérieur au stator 21, sensiblement perpendiculaire à l'axe de l'arbre de rotation . Le disque du flasque de fermeture 43 comprend un rebord périphérique venant coopérer de manière étanche avec un bord de forme complémentaire de l'ouverture circulaire du socle 44. Le maintien du flasque de fermeture 43 contre le socle 44 peut être obtenu par l'intermédiaire d'organes de fixation 45 traversant des oreilles du flasque de fermeture 43, typiquement vissé dans des alésages taraudés du socle 44. On remarque que la partie saillante 40 s'étend en longueur à partir du disque, coaxialement au disque. Cette partie saillante 40 forme le siège 41 pour le roulement 23 à son extrémité distale. Le flasque de fermeture 44 (y compris le disque et la partie saillante) peut être en métal, obtenu par moulage.

On remarque encore que le moteur électrique 2 peut comprendre un support creux 25 portant les éléments magnétiques (bobines et/ou aimant permanents) du rotor 20, coaxial et solidaire en rotation de l'arbre de rotation 22.

Ce support creux 25 vient coiffer le roulement 23 assurant le guidage de l'extrémité longitudinale de l'arbre de rotation 20 du côté du moteur électrique. Ce support creux 25 peut encore s'étendre axialement au-delà de l'extrémité longitudinale de l'arbre de rotation 22, coté moteur électrique, vers le flasque de fermeture 43. Dans le cas où le carter 4 présente la partie saillante 40, on remarque que la partie saillante 40 portant le roulement 23 est reçue à l'intérieur du support creux 25.

Le support creux 25 est un corps de révolution qui comprend une partie creuse, tubulaire, de diamètre interne permettant d'y loger le roulement 23, et de préférence le cas échéant, la partie saillante 40 du carter 4. Ce support creux 25 peut comprendre encore un manchon 26 permettant la fixation du support creux 25 sur l'arbre de rotation 22. Ce manchon 26 vient se fixer dans une position sur l'arbre de rotation 22 entre le mécanisme réducteur 3 et le roulement 23. Le diamètre intérieur du manchon 26 peut être ajusté à l'arbre de rotation en cette position intermédiaire. Il peut s'agir d'un ajustement serré permettant un assemblage par frettage entre le support creux 25 et ledit arbre de rotation 22.

On remarque que l'aimant multipolaire 5 peut prendre la forme d'une bague montée autour de l'arbre de rotation. Les domaines magnétiques (nord/sud) s'étendent en alternance suivant la circonférence de la bague. Cet aimant multipolaire 5 peut être solidaire dudit support creux 25, agencé autour dudit manchon 26 de fixation dudit support creux 25.

L'invention concerne encore un système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'invention dont l'arbre de sortie 8 entraine le mécanisme d'embiellage.

Dans un tel système, le mouvement de rotation continu de l'arbre de sortie 8 est transformé par le mécanisme d'embiellage en un mouvement de va-et-vient du ou des balais d'essuyage.

### NOMENCLATURE

- 1.: Moto-réducteur,

- 2.: Moteur électrique,
- 20.: Rotor,
- 21.: Stator,
- 22.: Arbre de rotation,
- 23, 24.: Roulements,
- 25.: Support creux,
- 26.: Manchon de fixation (support creux)

- 3.: Mécanisme réducteur,
- 30.: vis sans fin,
- 31.: Roue dentée,

- 4.: Carter,
- 40.: Partie saillante,
- 41.: 42 Sièges (roulements),
- 43.: Flasque de fermeture,
- 44.: Socle,

- 45.: Organe de fixation (vis),
- 46.: Ailettes (socle),

- 5.: Aimant multipolaire,
- 6, 7.: Anneaux élastiques,

- 8.: Arbre de sortie (Moto-réducteur).

## Revendications

1. Moto-réducteur (1) pour système d'essuyage de véhicule automobile comprenant :
- un moteur électrique (2) à courant continu sans balais comportant :
- un rotor (20),
- un stator (21) présentant des bobines d'excitation électromagnétique du rotor,
- un arbre de rotation (22) solidaire du rotor,
- un mécanisme réducteur (3) reliant l'arbre de rotation (22) et un arbre de sortie (8) du moto-réducteur,
et dans lequel le guidage en rotation de l'arbre de rotation (22) du rotor est assuré uniquement par deux roulements (23, 24) disposés respectivement aux deux extrémités longitudinales de l'arbre de rotation (22).

2. Moto-réducteur selon la revendication 1, dans lequel le mécanisme réducteur comprend un système vis sans fin (30) /roue dentée (31), la vis sans fin étant solidaire de l'arbre de rotation du rotor, la roue dentée étant solidaire de l'arbre de sortie (8) du moto-réducteur (1).

3. Moto-réducteur selon la revendication 2, dans lequel le diamètre de l'arbre de rotation (22) au niveau des extrémités longitudinales supportées par les deux roulements (23, 24) est supérieur au diamètre de l'arbre au niveau de la vis sans fin (30).

4. Moto-réducteur selon l'une des revendications 1 à 3, dans lequel le roulement (23) assurant le guidage de l'extrémité longitudinale de l'arbre de rotation (22) du côté du moteur électrique (2) est agencé interne à l'ensemble rotor (20) et stator (21).

5. Moto-réducteur selon la revendication 4, dans lequel le moto-réducteur (1) comportant un carter (4) recevant le moteur électrique (2), et de préférence également le mécanisme de réducteur (3), ledit carter (4) comprenant une partie saillante (40) reçue à l'intérieur de l'ensemble rotor (20) et stator (21) et dans lequel le roulement (23) assurant le guidage de l'extrémité longitudinale de l'arbre de rotation (22) du côté du moteur électrique (2) est maintenu dans un siège (41) de la partie saillante (40)

6. Moto-réducteur selon la revendication 4 ou 5, dans lequel le moteur électrique (2) comprend un support creux (25) portant les éléments magnétiques du rotor (20), coaxial et solidaire en rotation de l'arbre de rotation (22), ledit support creux (25) venant coiffer le roulement (23) assurant le guidage de l'extrémité longitudinale de l'arbre de rotation (20) du côté du moteur électrique (2) en s'étendant axialement au-delà de l'extrémité longitudinale de l'arbre de rotation (22), coté moteur électrique.

7. Moto-réducteur selon la revendication 6, dans lequel le support creux (25) comprend un manchon (26) assurant la fixation du support creux sur l'arbre de rotation (22) dans une position sur l'arbre intermédiaire entre le mécanisme réducteur (3) et le roulement (23) assurant le guidage de l'extrémité longitudinale de l'arbre de rotation (20) du côté du moteur électrique (2).

8. Moto-réducteur selon la revendication 7, présentant un dispositif pour la détermination de la position angulaire du rotor comprenant un aimant multipolaire (5) solidaire en rotation du rotor (20), et un ou plusieurs capteurs à effets Hall, et dans lequel ledit aimant multipolaire (5) prend la forme d'une bague montée solidaire dudit support creux (25), agencé autour dudit manchon (26).

9. Moto-réducteur selon l'une des revendications 1 à 8, dans lequel chacun des roulements (23, 24) comprend une bague extérieure, une bague intérieure, et des éléments roulants, les extrémités longitudinales de l'arbre de rotation correspondant aux roulements (23 ; 24) étant chacune de diamètre ajusté au diamètre interne de la bague intérieure du roulement associé.

10. Moto-réducteur selon l'une des revendications 1 à 8, dans lequel le blocage de la position axiale de l'un et/ou l'autre des deux roulements (23, 24) sur l'arbre de rotation (22) est assuré par un anneau élastique (6, 7) reçu dans une gorge de l'arbre de rotation (22).

11. Système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'une quelconque des revendications 1 à 10 dont l'arbre de sortie (8) entraine un mécanisme d'embiellage.
